# EUROPEAN PATENT APPLICATION

(11) **EP 0 932 260 A1**
(43) Date of publication of application: **28.07.1999**
(21) Application number: 98204187.3
(22) Date of filing: 11.12.1998
(51) Int. Cl.: H04B 1/03, H02G 3/08

(54) **A communication system which can be mounted on a flush-mounted box in a wall**

(30) Priority: 23.01.1998 NL 1008101
(71) Applicant: Ascom Tateco B.V., 2130 KB Hoofddorp (NL)
(72) Inventor: Ringenier, Jan, 2130 KB Hoofddorp (NL)
(74) Representative: Louet Feisser, Arnold

(57) **Abstract**

A communication system which can be mounted on a flush-mounted box in a wall, in which box wiring is present to which the communication system can be connected. The system comprises a baseplate (1), which can be fixed to said flush-mounted box and which is provided with an opening (2) through which the wires can extend. The system furthermore comprises one or more surface-mounted boxes (5), which can be detachably mounted on the baseplate (1) by fixing means, which surface-mounted boxes (5) contain communication means.

## Description

The invention relates to a communication system which can be mounted on a flush-mounted box in a wall, in which box wiring is present to which the communication system can be connected. Such a communication system may be used in a hospital, where the necessary facilities must be provided for each patient, such as facilities for calling nursing staff and equipment for verbal and/or other communication. To that end, communication means such as pushbuttons, pilot lamps, loudspeakers and contact boxes for connecting such equipment may be provided near a patient's bed, preferably on a wall.

The term communication system as used herein is understood to include a monitoring system, which term is generally used for a system wherein no verbal exchange takes place.

The objective of the invention is to provide a communication system which can be universally applied, because it can be mounted in various forms, according to what is required, and in several variations on a box which is flush-mounted in a wall.

Preferably, the communication system comprises a baseplate, which can be fixed to the flush-mounted box and which is provided with an opening through which the wires can extend, and one or more surface-mounted boxes, which can be detachably mounted on the baseplate by fixing means, which surface-mounted boxes may contain communication means. Thus, the surface-mounted boxes may be provided with pushbuttons or with keys, which may or may not be illuminated, with a loudspeaker and/or a microphone, with control means for operating a radio or a television, with a socket for connecting equipment, etc.

Preferably, a surface-mounted box is substantially rectangular, square in a preferred embodiment, seen in front view, and it comprises four side walls having a substantially flat external surface, and said fixing means are so designed as to make it possible to mount each surface-mounted box on the baseplate in several positions, turned through an angle of 90 degrees relative each other. Since the external surface of the side walls is flat, two surface-mounted boxes can be mounted on the baseplate in such manner as to be adjacent to each other in lateral direction, without any space being present between them, so that they appear to be in one piece. If all four side walls have a flat external surface, the surface-mounted boxes can abut against each other in whichever position they are arranged relative to each other.

In one preferred embodiment, the surface-mounted box comprises a front wall having an external surface which is curved in one direction, so that it has essentially the shape of a cylindrical surface, at least partially so. The slight curvature of the front face thus provided not only gives the surface-mounted box an attractive appearance, but it also makes it possible to place communication means, such as pushbuttons and indication lamps, on the front face in such a manner that they are also readily visible from aside.

Preferably, several surface-mounted boxes are mounted in a row, in abutting relationship, on a baseplate, wherein the baseplate is fixed to the flush-mounted box in the wall in such manner as to extend in vertical or in horizontal direction. Since a row of surface-mounted boxes can extend either in horizontal or in vertical direction, the assembly of surface-mounted boxes can be mounted in various manners, as desired.

Preferably, a surface-mounted box comprises an open side, which is enclosed by an edge which can at least partially abut against the baseplate. The baseplate may be provided with a recess at a location where said edge can abut against the baseplate, through which recess wiring can be laid between surface-mounted boxes which are arranged adjacently to each other. The presence of a recess in the side walls of the surface-mounted box for leading the necessary wires to said surface-mounted box is not required thereby. It is possible to form a passage between two surface-mounted boxes which are arranged beside each other on a baseplate, at a place where the baseplate abuts against the wall, by providing a recess in the baseplate. Preferably, the open side of the surface-mounted box is thereby enclosed by an endless edge, which edge extends in an essentially flat plane.

In one preferred embodiment, the baseplate comprises a circumferential edge which corresponds with the circumference of one or more surface-mounted boxes arranged in a row, so that the baseplate has a visible outer edge, which lies in the same plane as at least a number of the flat external surfaces of the boxes which are mounted on the baseplate.

In one preferred embodiment, the baseplate is provided with a multiple hole pattern, which makes it possible to mount the baseplate both in vertical and in horizontal position on different types of flush-mounted boxes comprising mutually divergent fixing points for bolts or screws. Preferably, holes are furthermore present near the corner points of the baseplate for fixing the baseplate to the wall with screws (as well). A baseplate formed in this manner can be used universally, because it can be mounted on a flush-mounted box without special adaptations, both in vertical and in horizontal position, in practically all situations.

A surface-mounted box may be provided with various kinds of equipment and fittings, both externally (knobs, buttons, pilot lamps) and internally (switches, loudspeaker, other electric and electronic equipment). When insufficient space is available in the normal surface-mounted box for the equipment to be fitted therein, it is preferred to use an intermediate box comprising two opposite, substantially rectangular, preferably square, open sides, and substantially the same circumference as a surface-mounted box, seen in front view. The intermediate box can be mounted on the baseplate, and a surface-mounted box can be mounted, whether or not detachably, on said intermediate box, whereby the intermediate box forms a holder for components of the system. Like a surface-mounted box, the four side walls of the intermediate box have a flat external surface, so that said intermediate box can abut against another intermediate box or against a surface-mounted box.

In another embodiment, the baseplate is provided with upright walls, at least along its circumferential edge, which walls can be abut against a surface-mounted box. Also in that case, the walls preferably have a flat external surface, and the baseplate is preferably square, seen in front view.

In order to make a connection between surface-mounted boxes and/or intermediate boxes arranged beside each other, weakened spots may be present, where parts of the side wall can be broken out in order to form an opening in the side wall. Such weakening may also be present in the upright walls which the baseplate may comprise.

The invention furthermore relates to a method to be used in the above-described communication system, wherein a baseplate as discussed above is fixed to a flush-mounted box in a wall, after which a surface-mounted box is mounted on said baseplate.

Further aspects of the communication system, which can be used either separately or in combination with each other, will be described hereafter by means of an embodiment and be defined in the claims.

The invention will be explained in more detail hereafter with reference to the figures, which show a few embodiments of a communication system.
Figures 1 - 3 show a baseplate;
Figures 4 - 7 show a surface-mounted box;
Figures 8 - 10 show another surface-mounted box;
Figures 11 and 12 show three surface-mounted boxes in mounted condition;
Figures 14 and 15 show a second embodiment of a baseplate;
Figure 16 shows two surface-mounted boxes in mounted condition;
Figures 17 - 19 show a third embodiment of a baseplate;
Figures 20 - 22 show an intermediate box; and
Figures 23 and 24 show a baseplate comprising side walls.

The figures are merely schematic representations, wherein corresponding parts are indicated by the same numerals.

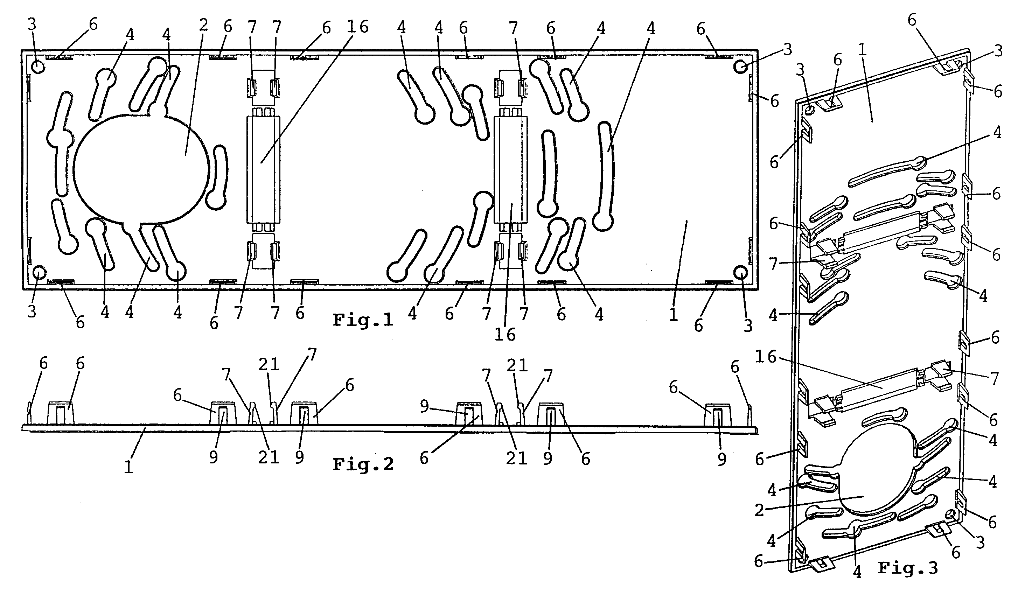

Figure 1 shows a baseplate 1 in front view, which baseplate is provided with an opening 2. Baseplate 1, whose length is three times larger than its width, can be a screwed on a wall either in vertical direction or in horizontal position, for example by using the four screw holes 3. The baseplate 1 may thereby be positioned in such a manner that opening 2 coincides with a flush-mounted box in the wall, so that the wiring which is present in said flush-mounted box can extend through opening 2.

A flush-mounted box is often provided with internally threaded holes, into which threaded bolts can be screwed for mounting parts of the communication system. The pattern in which said holes are provided varies according to the type of flush-mounted box in question and the jurisdiction in which said box is used. In order to make it possible to mount the baseplate on boxes having varying hole patterns, the base plate is provided with a large number of recesses 4, a number of which will always correspond with a particular hole pattern of a particular box. The recesses 4 consist of a narrow portion and a wide portion, wherein the wide portion is dimensioned to allow a head of a bolt to pass therethrough, whilst the narrow portion is dimensioned such that the same head will engage the edge of the recess when the bolt is tightened. Such a method of mounting is known per se, its advantage is that the baseplate 1 can be removed without unscrewing the bolts completely.

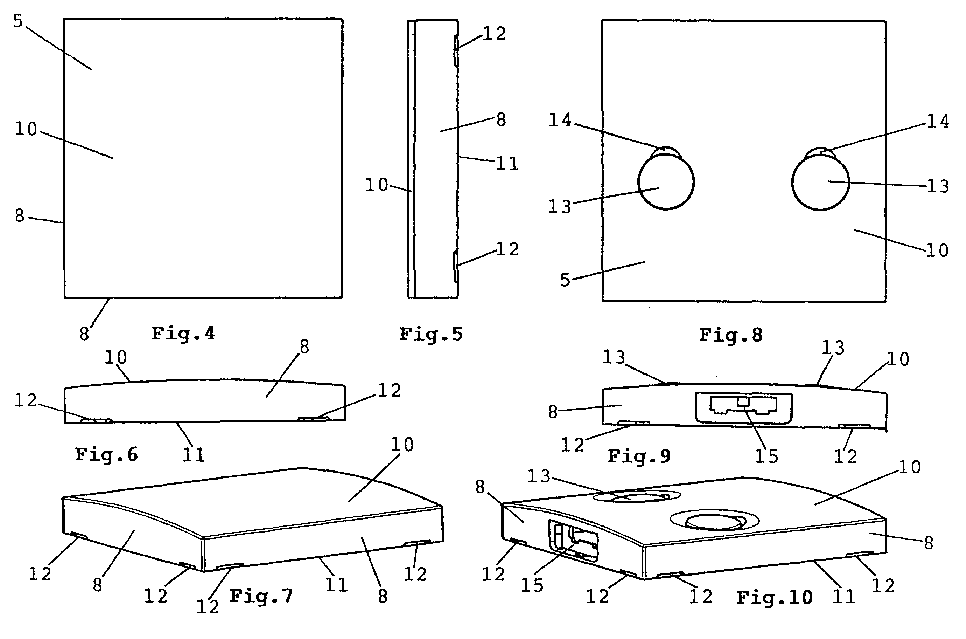

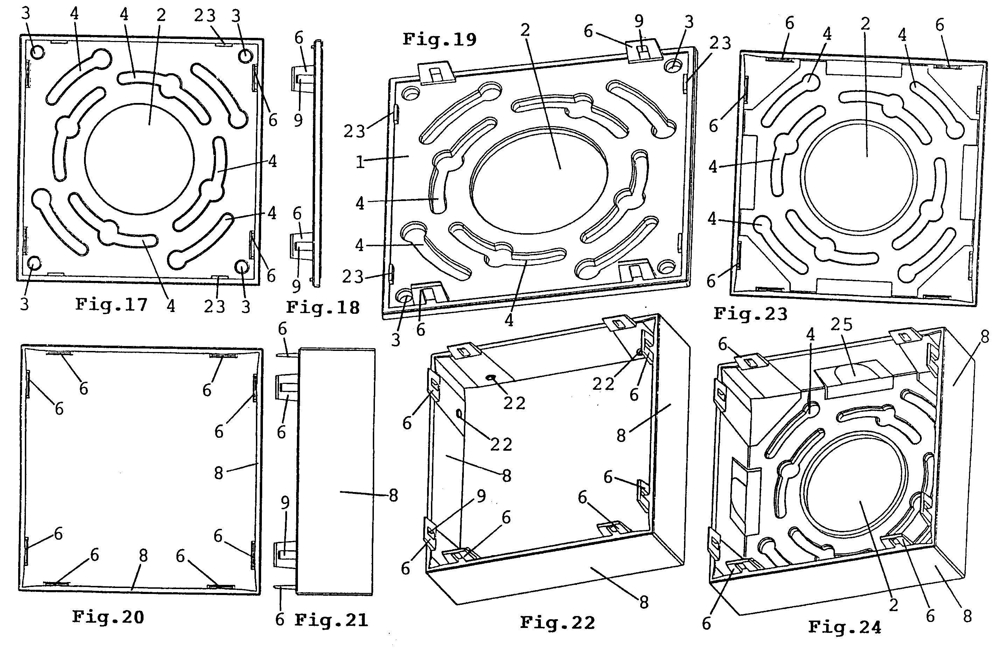

After baseplate 1 has been fixed to a wall in horizontal direction or in vertical direction, surface-mounted boxes 5 (Figures 4 - 10) can be mounted on baseplate 1. The baseplate is to that end provided with upright lips 6, 7, which are capable of holding box 5. The inner side of each side wall 8 of a box is to that end provided with two cams 22 (Figure 22), which engage either in a recess 9 of lip 6 or behind a rib 21 of lip 7. In both cases, box 5 is fixed by lips 6, 7 in such a manner that box 5 can be detached from baseplate 1 by exerting a sufficiently large force on the box, whereby a slight elastic deformation of lip 6, 7 takes place.

Figures 4 - 7 show a surface-mounted box 5 in its simplest form. The box comprises a front wall 10, which is shown in elevation in Figure 4. Figure 5 is a side view, which shows the outer side of side wall 8 and part of the outer side of front wall 10, because front wall 10 is slightly curved, wherein the external surface of front wall 10 is essentially cylindrical.

Figure 6 is a side view, wherein the curvature of front wall 10 is shown. Figure 7 is a perspective view, wherein surface-mounted box 5 is shown.

Surface-mounted box 5 comprises a front wall 10 and four side walls 8, the side of box 5 positioned opposite front wall 10 is open. The box can be mounted on baseplate 1 with this side, whereby an edge 11 of box 5 abuts against baseplate 1. The edge 11 of box 5 is provided with a number of recesses 12. By inserting a screwdriver into recess 12 and slightly turning the screwdriver, a force is exerted on the box, by means of which box 5 can be detached from baseplate 1.

Box may contain components and/or parts of the communication system, such as a loudspeaker, an amplifier or a microcomputer.

Figures 8 - 10 show a surface-mounted box, whose front wall 10 is provided with two pushbuttons 13, by means of which switches present inside said surface-mounted box 5 can be operated. Each of the pushbuttons 13 is provided with a lamp 14, by means of which it can be indicated whether the switch in question is off or on.

One of the side walls 8 of the surface-mounted box as shown in Figures 8 - 10 is provided with a socket outlet 15, into which a plug can be inserted. This may be a socket outlet 15 for connecting a lighting lamp, for example, but it is also possible to use such a socket outlet for any other part or component of the communication system which is to be connected by means of an electrical conductor. This may for example be a loudspeaker for a radio, a headset or a control panel via which communication can take place.

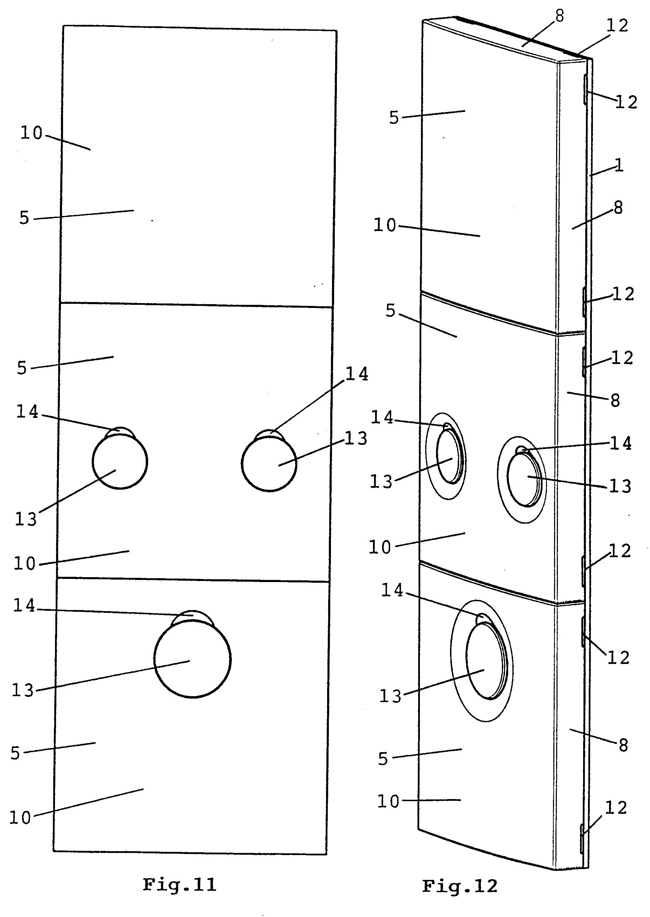

Figures 11 and 12 show baseplate 1 which is fixed to a wall, on which three boxes 5 are mounted one above the other. The upper box 5 corresponds with the box which is shown in Figure 7, the middle box corresponds with the box which is shown in Figure 10, and the lower box is provided with one pushbutton 13. It will be apparent that it is not possible in this situation to use the socket outlet 15 of the middle box, because the wall in which said socket outlet is present abuts against the side wall of the box mounted thereunder.

All side walls 8 of each surface-mounted box 5 have a flat external surface, so that boxes 5 which are disposed adjacently to each other will abut against each other, thus forming a visual unit. The boxes may thereby abut against each other with their rectangular side walls or with the side walls that are provided with a curved edge, which curved edge corresponds with the curvature of front wall 10. The latter is for example the case in the embodiment according to Figures 11 and 12.

When boxes 5 are arranged in abutting relationship, there may be a need for electrical conductor wires leading from one surface-mounted box 5 to the other. In order to prevent having to form holes in abutting side walls 8 for that purpose, the baseplate is provided with recesses 16 (Figure 1 and Figure 3) at the location of two abutting side walls 8. Several electrical wires can extend from one box to another through said recesses 16, so that the three surface-mounted box 5 which are shown in Figure 12 can be interconnected without having to form recesses or holes in the side walls 8 of boxes 5 for that purpose.

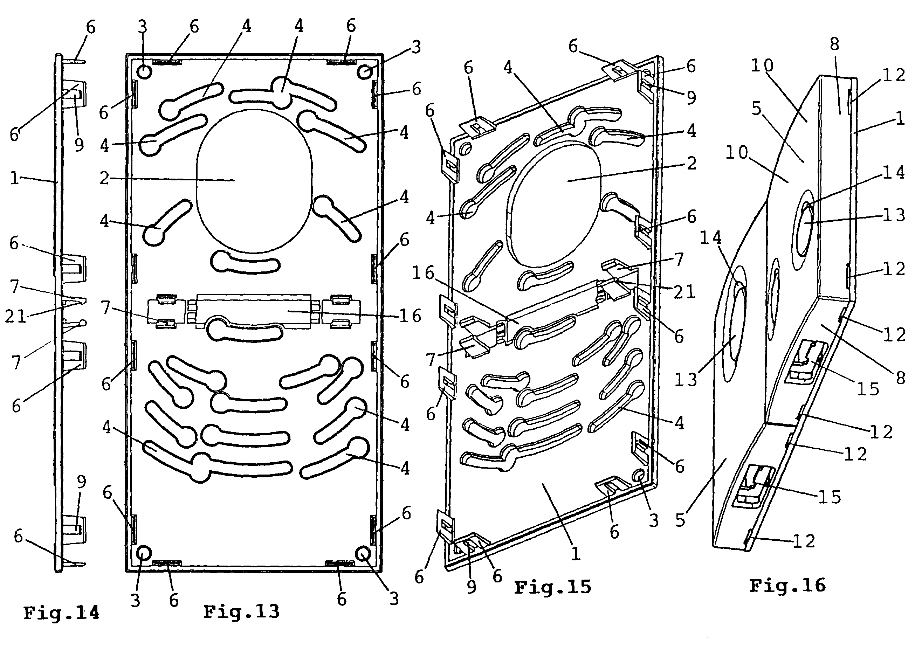

Figure 13 shows a baseplate 1 on which two surface-mounted boxes can be mounted, which baseplate corresponds with the baseplate 1 of Figure 1. Figure 14 is a side view, and Figure 15 is a perspective view of the baseplate of Figure 13.

Figure 16 shows the situation wherein baseplate 1 according to Figures 13 - 15 is fixed to a wall, wherein two surface-mounted boxes 5 are mounted on baseplate 1. In this embodiment, the two surface-mounted boxes 5 abut against each other with a rectangular side wall 8. Incidentally, said boxes 5 are the same boxes 5 as the two lower boxes of the embodiment as shown in Figure 12.

Figures 17 - 19 show a baseplate of rectangular shape, on which one box 5 can be mounted. To that end, four lips 6 are present. In addition, four projections 23 are present, by means of which box 5 is held in its correct position.

Figures 20 - 22 show an intermediate box which is essentially square, seen in front view (Figure 20). The intermediate box can be mounted on a baseplate 1 in the same manner as a box 5 is mounted thereon. The front side of the intermediate box is open, just like the rear side, and a box 5 can be mounted on said front side, to which end lips 6 are present on said intermediate box. The four side walls 8 of the intermediate box are all rectangular, and they have a flat external surface. Figure 22 shows the intermediate box in perspective view. Figure 22 moreover shows cams 22, which can engage in recesses 9 of lips 6 or behind ribs 22 of lips 7.

By placing the intermediate box between the baseplate 1 and the box 5, the amount of space which is available for equipment and components can be enlarged considerably while using the standard baseplate 1 and a standard box 5.

Figures 23 and 23 show an embodiment of a baseplate which comprises four side walls 8, which each have a rectangular and flat external surface. It is possible to mount a surface-mounted box 5 on said baseplate comprising side walls as well, whereby the space inside the box is enlarged considerably for accommodating equipment, parts and/or components of the communication system. The side walls 8 of the baseplate according to Figures 24 are provided with lips 6 for mounting a characterized by thereon, and said side walls 8 may also comprise weakened portions 25, which can be broken out in order to form a passage for electrical wires. In this manner, the baseplate may be provided on each one of its four side walls with means for receiving and/or transmitting information in the form of electrical signals.

Preferably, the baseplate is slightly curved, so that the baseplate can be mounted with its concave side facing the wall.

## Claims

1. A communication system which can be mounted on a flush-mounted box in a wall, in which box wiring is present to which the communication system can be connected, which communication system comprises a baseplate (1), which can be fixed to said flush-mounted box and which is provided with an opening (2) through which the wires can extend, and which communication system furthermore comprises one or more surface-mounted boxes (5), which can be detachably mounted on the baseplate (1) by fixing means, which surface-mounted boxes (5) contain communication means.

2. A system according to claim 1, characterized in that a surface-mounted box (5) is substantially rectangular, preferably square, seen in front view, that it comprises four side walls (8) having a substantially flat external surface, and that said fixing means are so designed as to make it possible to mount each surface-mounted box (5) on the baseplate in several positions, turned through an angle of 90 degrees relative each other.

3. A system according to any one of the preceding claims, characterized in that said surface-mounted box (5) comprises a front wall (10) having an external surface which is curved in one direction, so that it has essentially the shape of a cylindrical surface, at least partially so.

4. A system according to any one of the preceding claims, characterized in that several surface-mounted boxes (5) are mounted in a row, in abutting relationship, on a baseplate (1), wherein said baseplate (1) can be fixed to the flush-mounted box in such manner as to extend in vertical or in horizontal direction.

5. A system according to any one of the preceding claims, characterized in that a surface-mounted box (5) comprises an open side, which is enclosed by an edge which can at least partially abut against the baseplate (1), and in that said baseplate (1) is provided with a recess (16) at a location where said edge can abut against the baseplate (1), through which recess (16) wiring can be laid between surface-mounted boxes (5) which are arranged adjacently to each other.

6. A system according to any one of the preceding claims, characterized by an intermediate box comprising two opposite, substantially rectangular, preferably square, open sides, and substantially the same circumference as a surface-mounted box (5), seen in front view, which intermediate box can be mounted on said baseplate (1), and a surface-mounted box (5) can be mounted on said intermediate box, whereby said intermediate box forms a holder for components of the system.

7. A baseplate for use in a communication system, which can be fixed to a flush-mounted box in a wall, in which box wiring is present to which the communication system can be connected, which baseplate (1) is provided with an opening (2), through which said wiring can extend, and which baseplate (1) comprises fixing means, so that one or more surface-mounted boxes (5) can be detachably mounted on said baseplate (1).

8. A baseplate according to claim 7, characterized in that the baseplate (1) is rectangular, seen in front view, wherein the length equals a number of times the width.

9. A baseplate according to claim 7 or 8, characterized in that said baseplate (1) is provided with a recess (16) at a location where two abutting walls (8) of two surface-mounted boxes (5) can be positioned with their edges abutting against the baseplate (1), through which recess (16) wiring can be laid from one surface-mounted box (5) to the other.

10. A baseplate according to any one of the claims 7 - 9, characterized by a multiple hole pattern (4), which makes it possible to mount the baseplate both in vertical and in horizontal position on different types of flush-mounted boxes comprising mutually divergent fixing points for bolts or screws, wherein holes (3) are preferably present near the corner points of the baseplate (1) for fixing the baseplate (1) to the wall with screws (as well).

11. A baseplate according to any one of the claims 7 - 10, characterized in that the baseplate (1) is rectangular, preferably square, seen in front view, with four side walls (8) extending along its circumference, which walls have a substantially flat external surface, which are capable of abutting against a surface-mounted box (5).

12. A surface-mounted box for a communication system which can be mounted on a flush-mounted box in a wall, in which box wiring is present to which the communication system can be connected, which communication system comprises a baseplate (1) on which said box (5) can be detachably mounted, wherein said box (5) abuts against said baseplate (5) with an open side, which surface-mounted box (5) is substantially rectangular, preferably square, seen in front view, and which comprises four side walls (8) having a substantially flat external surface, which adjoin each other.

13. A surface-mounted box according to claim 12, characterized by a front wall (10) having an external surface which is curved in one direction, so that it has essentially the shape of a cylindrical surface, at least partially so.

14. A surface-mounted box according to claim 12 or 13, characterized in that said box (5) is provided with one or more pushbuttons (13) on the front side and/or with a socket (15) in a side wall (8) and/or with a loudspeaker and/or a microphone and/or with illumination (14).

15. A method for installing a communication system, wherein a baseplate (1) according to any one of the claims 13 - 18 is fixed to a flush-mounted box in a wall, after which a surface-mounted box (5) according to any one of the claims 12 - 14 is mounted on said baseplate (1).
